# EUROPEAN PATENT SPECIFICATION

(11) **EP 1 349 051 B1**
(45) Date of publication and mention of the grant of the patent: **10.12.2008**
(21) Application number: 01273202.0
(22) Date of filing: 28.12.2001
(51) Int. Cl.: G06F 3/023, G06F 3/02, H04M 1/247, H04M 1/23

(54) **INFORMATION PROCESSING DEVICE**
INFORMATIONSVERARBEITUNGSEINRICHTUNG
DISPOSITIF DE TRAITEMENT D'INFORMATIONS

(30) Priority: 05.01.2001 JP 2001000349
(43) Date of publication of application: 01.10.2003
(73) Proprietor: Sony Corporation, Tokyo 141-0001 (JP)
(72) Inventor: ARAKAWA, Emi, Shinagawa-ku, Tokyo 141-0001 (JP); IRIMAJIRI, Mayu c/o Sony Corporation, IPD, 1-11-1 Osaki Shinagawa-ku,Tokyo 141-0032 (JP)
(74) Representative: Smith, Samuel Leonard
(86) International application number: PCT/JP2001/011621
(87) International publication number: WO 2002/056168

(56) References cited:
- EP-A- 0 915 605
- EP-A- 0 944 218
- EP-A- 1 028 571
- JP-A- 1 150 925
- JP-A- 11 327 741
- US-A- 5 677 949
- US-A- 5 841 849
- US-A- 5 901 222
- US-A- 6 052 070
- US-A- 6 064 725

## Description

### Field of the Invention

The present invention relates to information processing apparatus, more specifically to an information processing apparatus suitable for inputting information using jog dial or the like.

### Background Art

Cellular phones or the like are provided with a device so-called jog dial for selecting a desired function from a menu. The use of such jog dial enables the user to input a telephone number or select a desired function of a cellular phone or the like using a single hand.

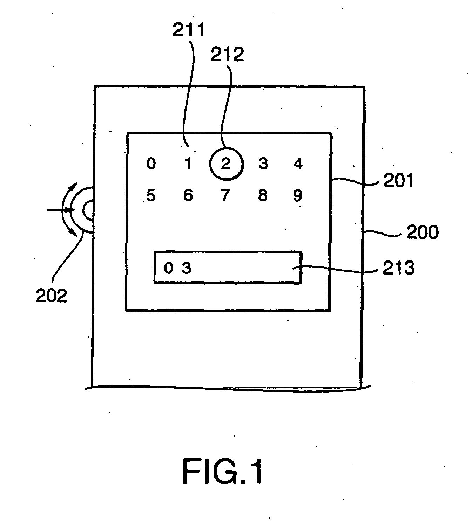

Reference is made to FIG. 1 to describe procedures of inputting a telephone number using a cellular phone equipped with a jog dial. A cellular phone 200 is provided with a display section 201 including a liquid crystal display at the upper section. Also provided with the cellular phone 200 is with a jog dial 202 on a side surface of the cellular phone 200 and at the left side of the display section 201. The display section 201 includes a number display section 211 for displaying digits 0 to 9 to input a telephone number, a cursor 212 movable onto one of these digits and a telephone number display section 213 for displaying the selected digits (a telephone number).

The jog dial 202 is normally designed to be turned in both up and down directions and can be depressed towards the main body of the cellular phone 200. In case of inputting a telephone number, the jog dial 202 is turned in up or down direction to move the cursor 212 on the digits displayed in the number display section 211. When the cursor 212 is on the number including the desired telephone number such number can be selected by depressing the jog dial 202 and the selected number is in addition displayed in the telephone number display section 213.

Although the telephone numbers are inputted in the above manner, it is to be noted that the jog dial 202 is manipulated in the up or down direction while the cursor 212 moves in left or right direction. Such different directions of manipulating the jog dial 202 and moving the cursor 212 cause problems such as consuming a longer time for inputting and selecting a wrong number because the user must select a desired number while paying attention to the fact that the up-down direction is converted into the left-right direction.

In addition, although a desired number is selected by moving the cursor 212 onto such number, the display section 201 of a cellular phone is so small that the displayed digits and the moving cursor 212 are not clear enough especially for weak-sighted users. Furthermore, since only the cursor 212 moves, i.e., the screen display lacks in dynamic changes, it is difficult for the user to quickly recognize if the result of his/her manipulation (operation) is displayed.

EP-A-1 028 571 describes a method of entering a subscriber number in a menu-driven telephone, the digits available being displayed on a display device of the telephone as a menu. By moving a marker in the menu by means of activating a control element, the digits of the subscriber number to be entered are first sequentially marked and then selected each by activating a selection key. In a telephone operated by this method, there is therefore no need of a keypad.

EP-A-0 944 218 describes an electronic apparatus including a screen configured to display a desired portion of icons. A controller rotationally moves icons along a fictitious ring so that the desired portion of the icons is displayed on the screen.

### Disclosure of the Invention

The present invention is made in consideration of the above circumstances, the manipulation (operation) of the jog dial and the selected number being made to be intuitively recognized and the displayed digits are dynamically changed.

According to the present invention, there is provided an information processing apparatus having an operation section operable in a rotational direction and a pressing direction orthogonal to the rotation axis of the rotational direction, the apparatus comprising:
first display means for displaying a predetermined number of digits and changing a position of displayed digits in response to operation of the operation section in the rotational direction;
second display means for displaying on one of the digits displayed by the first display means a cursor at a position independent of the operation of the operation section; and
third display means for displaying the number at the location of the cursor displayed by the first display means at a different display area from the display area of the first display means if the operation section is operated in the pressing direction; wherein
the first display means displays the predetermined number of digits in a substantially arc shaped array and changes the position of the displayed digits by rotating the arc shaped array in a direction corresponding to the rotational direction of the operation section, operable in a rotational direction and a pressing direction orthogonal to the rotation axis of the rotational direction, the operation section being a circular crape, half of which extends outwardly of the information processing apparatus to be visible to a user, the apparatus comprising:
   fust display means for displaying a predetermined number of digits and changing a position of displayed digits in response to operation of the operation section in the rotational direction;
   second display means for displaying on one of the digits displayed by the first display means a cursor at a position independent cf the operation of the operation section and for magnifying the digit on which the cursor is displayed; and
   third display means for displaying the digit that is displayed at the location of the cursor by the first display means at a different display area from the display area of the first display means if the operation section is operated in the pressing direction; wherein
   the first display means is arranged to display the predetermined number of digits in a substantially arc shaped array and to change the position of the displayed digits by rotating the arc shaped array in a direction corresponding to the rotational direction of the operation section; and
   the substantially arc-shaped array displayed on the first display means is aligned with the operation section such that the half of the operation section visible to a user and the arc-shaped array displayed on the first display means form an image of a complete circle of different magnification factor.

According to the present invention, there is also provided an information processing method for an information processing apparatus having an operation section operable in a rotational direction and a pressing direction orthogonal to the rotation axis of the rotational direction, the operation section being a circular crape, half of which extends outwardly of the information processing apparatus to be visible to a user, the method comprising:
a first display controlling step for controlling display of a predetermined number of digits and changing display position of the displayed digits in response to operation of the operation section in the rotational direction;
a second display controlling step for controlling display of a cursor on one of the digits displayed in the processing of the first display controlling step, the cursor having a fixed location independent of the operation of the operation section, and for causing the magnification of the digit on which the cursor is displayed; and
a third display controlling step for controlling display of the digit at the location of the cursor displayed by the processing of the second display controlling step in a display area different from the display area defined in the first display controlling step if the operation section is manipulated in the pressing direction;
displaying the predetermined number of digits in a substantially arc shaped array; and
changing the position of the displayed digits by rotating the arc shaped array in a direction corresponding to the rotational direction of the operation section,
   wherein
the substantially arc-shaped array is aligned with the operation section such that the half of the operation section visible to a user and the arc shaped array displayed on the first display means form an image of a complete circle of different magnification factor.

In the information processing apparatus, method and recording medium according to the present invention, display locations of the displayed digits are changed in response to the manipulation of the operation section in a first direction and the cursor is positioned on one of the displayed digits while keeping the cursor at a fixed location independent of the manipulation of the operation section. The number on which the cursor is positioned is displayed at a different display location if the operation section is manipulated in a second direction.

### Brief Description of Drawings

FIG. 1 shows a drawing for describing the way of inputting a telephone number in a conventional cellular phone.
FIG.2 shows a system configuration of one embodiment of the information processing apparatus to which the present invention is applied.
FIG.3 shows an external view of the cellular phone.
FIG.4 shows an external view of an upper section of the cellular phone.
FIG.5 shows an internal construction of the cellular phone.
FIG.6 shows a drawing for describing the graphic interface.
FIG.7 shows a flowchart for inputting a telephone number in the cellular phone.
FIG.8 shows one example of images displayed on a liquid crystal display.
FIG.9 shows another example of images displayed on the liquid crystal display.
FIG.10 shows still another example of images displayed on the liquid crystal display.
FIG. 11 shows a flowchart for describing the way of inputting a telephone number in the cellular phone.
FIG.12A shows yet another example of images displayed on the liquid crystal display.
FIG. 12B shows a further example of images displayed on the liquid crystal display.
FIG.13A shows a further example of images displayed on the liquid crystal display.
FIG.13B shows a further example of images displayed on the liquid crystal display.
FIG.13C shows a further example of images displayed on the liquid crystal display.
FIG.14A shows a further example of images displayed on the liquid crystal display.
FIG.14B shows a further example of images displayed on the liquid crystal display.
FIG.14C shows a further example of images displayed on the liquid crystal display.
FIG.15A shows a further example of images displayed on the liquid crystal display.
FIG.15B shows a further example of images displayed on the liquid crystal display.
FIG.15C shows a further example of images displayed on the liquid crystal display.
FIG. 16 shows a flowchart for describing the way of inputting a telephone number in the cellular phone.
FIG.17A shows a further example of images displayed on the liquid crystal display.
FIG.17B shows a further example of images displayed on the liquid crystal display.
FIG. 18 shows a flowchart for describing the way of inputting a telephone number in the cellular phone.
FIG.19A shows a further example of images displayed on the liquid crystal display.
FIG.19B shows a further example of images displayed on the liquid crystal display.
FIG.19C shows a further example of images displayed on the liquid crystal display.
FIG.19D shows a further example of images displayed on the liquid crystal display.
FIG.19E shows a further example of images displayed on the liquid crystal display.
FIG.19F shows a further example of images displayed on the liquid crystal display.
FIG.19G shows a further example of images displayed on the liquid crystal display.
FIG.20 shows a drawing for describing a medium.

### Best Modes of Implementing the Invention

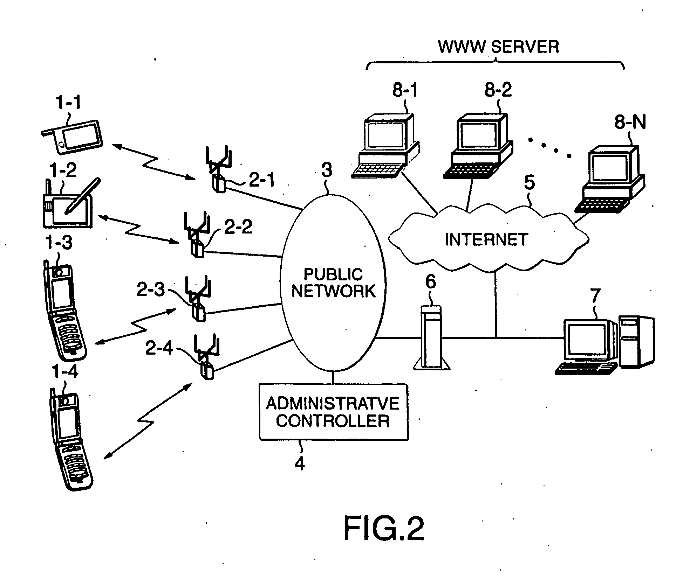

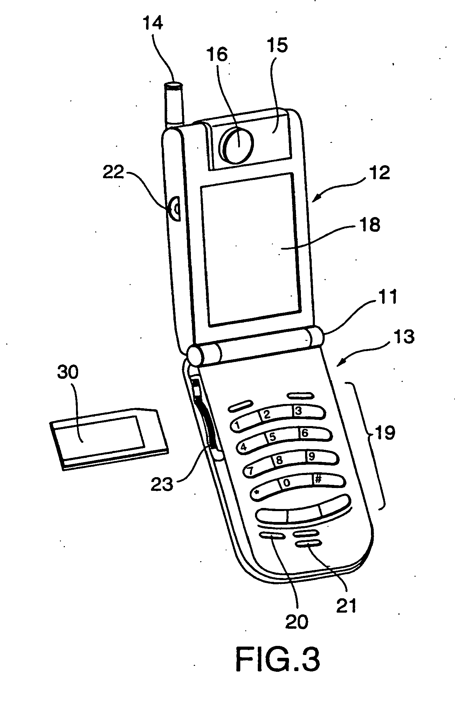

Now, embodiments of the present invention will be described hereunder by reference to the accompanying drawings. FIG.3 illustrates the construction of one embodiment of the information processing apparatus to which the present invention is applied. Illustrated in FIG. 2 is a network system in which portable information terminals 1-1 to 1-4 are connected. Base stations 2-1 to 2-4 which are fixed wireless stations are provided in each cell of desired size dividing the communication service area. Connected to the base stations 2-1 to 2-4 through a wireless communication network such as, e.g., W-CDMA (Wideband-Code Division Multiple Access) are the portable information terminals 1-1 to 1-4 which are mobile wireless stations. Large capacity high-speed data communication up to a maximum of 2 [Mbps] can be performed between them using a 2 [GHz] frequency bandwidth.

Since the portable information terminals 1-1 to 1-4 can perform large capacity, high speed data communication by the W-CDMA system, it is possible to communicate various data, not only voice communications but also transmitting and receiving electronic mails, reading simple home pages, transmitting and receiving images, etc.

Also, the base stations 2-1 to 2-4 are connected each through a wire to a public network 3 to which internet 5 and many subscriber terminals, computer networks and intranets (not shown) are connected. Also connected to the public network 3 is an access server 6 for an Internet service provider to which a contents data server 7 is connected.

The contents data server 7 provides contents data such as, e.g., simple home pages in a form of a file of, e.g., compact HTML (Hyper Text Markup Language) upon request by the subscriber wire terminals or the portable information terminals 1-1 to 1-4.

It is to be noted that, connected to Internet 5 are a large number of WWW servers 8-1 to 8-N for enabling the subscriber wire terminals and the personal information terminals 1-1 to 1-4 to gain access to the WWW servers 8-1 to 8-N in accordance with the TCP/IP (Transmission Control Protocol/Internet Protocol) protocol.

In practice, communication is made by the simple transport protocol in 2 [Mbps] between the portable information terminals 1-1 to 1-4 and the base stations (not shown) 2-1 to 2-4 while by the TCP/IP protocol between the base stations 2-1 to 2-4 and the WWW servers 8-1 to 8-N.

It is to be noted that an administrative controller 4 is connected to the subscriber terminals and the probable information terminals 1-1 to 1-4 through the public network 3 for performing authentication and charge processing to the subscriber wire terminals and the portable information terminals 1-1 to 1-4.

Now, the portable information terminals 1-3 and 1-4 will be described. The portable information terminals 1-1 and 1-2 are generally known as PDAs (Personal Digital Assistants) while the portable information terminals 1-3 and 1-4 are generally known as cellular phones.

Illustrated in FIG.3 is an external view of the cellular phone such as the portable information terminal 1-3, 1-4. The portable terminal 1-3, 1-4 is a cellular phone provided with a camera capable of taking pictures and is referred to as a cellular phone 10 hereinafter. As illustrated in FIG.3, the cellular phone 10 is divided into a display section 12 and a main body 13 by a central hinge section 11 so as to be folded at the hinge section 11.

The display section 12 includes an antenna 14, installed at the upper left section in such a manner to be pulled out or pushed in, for transmitting and receiving radio wave to and from the base station 2. The display section 12 is also provided with a camera section 15 at the center top section in such a manner to be turned at an angle of about 180 degrees. The camera section 15 includes a CCD (Charge Coupled Device) camera 16 capable of taking pictures of any desired object.

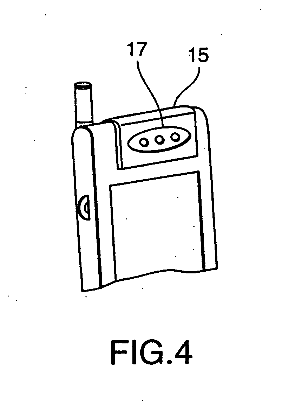

By positioning the camera section 15 by turning about 180 degrees by the user, the display section 12 is switched to a normal voice communication mode, wherein a speaker 17 at the back center of the camera section 15 faces the front as shown in FIG. 4.

In addition, the display section 12 is provided with a liquid crystal display 18 on the front surface for displaying not only the radio wave receiving condition, the remaining lifetime of the battery, names and telephone digits as registered in the telephone directory and communication histories but also images such as contents of electronic mails, simple home pages and pictures taken by the CCD camera 16 of the camera section 15.

On the other hand, the main body 13 includes on the surface various operation keys 19 such as numerical keys 0 to 9, a CALL key, a REDIAL key, an END/POWER key, a CLEAR key and Electronic mail key. Also, the main body 13 is provided with a MEMO button 20 and a microphone 21 below the operation keys 19; the MEMO button 20 is used to record voice communication with the interlocutor. The microphone 21 is used to pick-up user's voice.

Disposed on the left side surface of the display section 12 slightly extending outwardly from the display section 12 is a jog dial 22 to be used for various operations such as scrolling the telephone list or the Electronic mails displayed on the liquid crystal display 18, turning the page of simple home pages and transmitting images by turning the jog dial 22.

For example, the user can turn the jog dial 22 for selecting a desired telephone number from a plurality of telephone numbers in a telephone list displayed on the liquid crystal display 18. Upon depressing the jog dial 22 towards the inside of the display section 12, the selected telephone number is defined and an autodialing operation to the selected telephone number is initiated.

The main body 13 has a battery pack (not shown) installed in the back. If the hang up/power key is in the ON condition, power is supplied from the battery pack to each circuit section and the cellular phone becomes the operable condition.

It is to be noted that, the main body 13 is formed with a slot 23 in the upper side surface for inserting or extracting a memory stick (trademark of Sony Corporation) 30. When the MEMO button 20 is depressed, voice of the person one is speaking to is recorded in the memory stick 30 or electronic mails, simple home pages or pictures taken by the CCD camera 16 are recorded depending on the user's operation.

Since the cellular phone 10 is designed to allow insertion or extraction of the memory stick 30, the data can be shared with other electronic equipment by means of the memory stick 30.

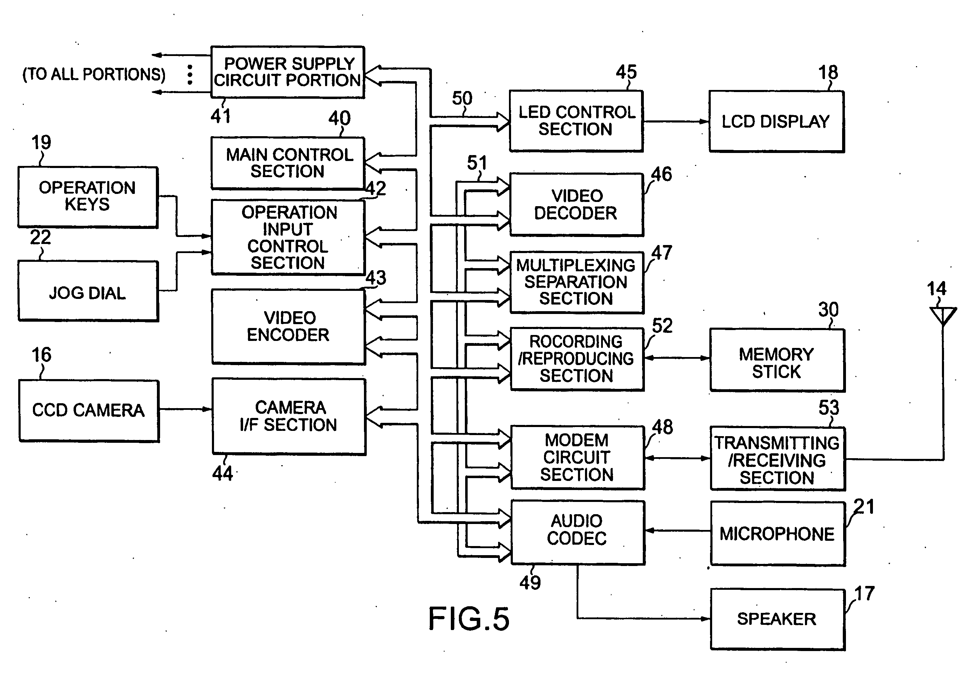

As illustrated in FIG. 5, the cellular phone 10 includes a main control section 40 for supervising the control of the each section of the display section 12 and the main body 13. The main control section 40 is connected through a main bus 50 to a power supply circuit section 41, an operation input control section 42, a video encoder 43, a camera interface (I/F) section 44, an LCD control section 45, a video decoder 46, a multiplexing separation section 47, a recording/reproducing section 52, modulation/demodulation (MODEM) circuit section 48 and an audio codec 49. Also, the video encoder 43, the video decoder 46, the multiplexing separation section 48 and the audio codec 49 are connected to one another through a synchronization bus 51.

Upon user's operation of the hang up/power key, the power supply circuit section 41 is turned on and supplies power from the battery pack to each section so that the cellular phone 10 becomes the operable condition.

In accordance with the control of the main control section 40 including a CPU, a ROM and a RAM, the audio codec 49 of the cellular phone 10 converts the voice signal picked up by the microphone 21 in the voice communication mode into the digital audio data. Such audio data undergoes spread spectrum processing by the modulation/ demodulation circuit section 48 and is transmitted from the antenna 14 after digital/analog conversion processing and frequency conversion processing by a transmitting/receiving circuit section 53.

Also, in the voice communication mode, the cellular phone 10 performs amplification, frequency conversion and analog/digital conversion on the signal received by the antenna 14. Such signal is, then, reverse spread spectrum processed by the modulation/demodulation circuit section 48 and converted into the analog sound signal by the audio codec 49 before being outputted from the speaker 17.

Furthermore, in case of transmitting electronic mails in the data communication mode of the cellular phone 10, the text data of electronic mail inputted by the operation keys 19 and the jog dial 22 is outputted to the main control section 40 through the operation input control section 42.

The main control section 40 performs the spread spectrum processing of the text data by the modulation/demodulation circuit section 48 as well as the digital/analog conversion processing and the frequency conversion processing by the transmitting/receiving circuit section 53 before being transmitted to the base station 2 (FIG. 2) through the antenna 14.

On the contrary, in case of receiving an electronic mail in the data communication mode of the cellular phone 10, the signal received from the base station 2 through the antenna 14 is reverse spread spectrum processed by the modulation/demodulation circuit section 48 to reproduce the original text data before displaying the electronic mail on the liquid crystal display 18 through the LCD control section 45. Then, the cellular phone 10 is capable of recording the received electronic mail in the memory stick 30 through the record reproduction section 52 in accordance with the user's operation.

On the other hand, in case of transmitting a video data in the data communication mode of the cellular phone 10, the image data taken by the CCD camera 16 is supplied to the video encoder 43 through the camera interface section 44.

It is to be noted that, in case of not transmitting the video data, the cellular phone 10 is also capable of directly displaying the image data taken by the CCD camera 16 on liquid crystal display 18 through the camera interface section 44 and the LCD control section 45.

The video encoder 43 converts the video data supplied from the CCD camera 16 into coded video data by compressed coding in accordance with a desired coding system such as MPEG (Moving Picture Experts Group) 2 and such converted data is sent to the multiplexing separation section 47. At this event, the cellular phone 10 sends the digital audio data of the sound picked up by the microphone 21 while taking pictures by the CCD camera 16 to the multiplexing separation section 47 through the audio codec 49.

The multiplexing separation section 47 multiplexes in the predetermined method the coded video data supplied from the video encoder 43 and the audio data supplied from the audio codec 49. The resulting multiplexed data is spread spectrum processed by the modulation/demodulation circuit section 48 and also performed digital/analog conversion processing and frequency conversion processing by the transmitting/receiving circuit section 53 before being transmitted through the antenna 14.

Conversely, in case of receiving moving video file data linked to, e.g., simple home page in the data communication mode of the cellular phone 10, the signal received from the base station 2 through the antenna 14 is performed the reverse spread spectrum processing by the modulation/demodulation circuit section 48 and the resulting multiplexed data is sent to the multiplexing separation section 47.

The multiplexing separation section 47 separates the multiplexed data into the coded video data and the audio data and the coded video data is then supplied to the video decoder 46 and the audio data is supplied to the audio codec 49 through the synchronized bus 51.

The decoder 46 decodes the coded video data to reproduce the moving video data in accordance with a decoding method corresponding to the predetermined coding method such as MPEG2 and such decoded video data is then supplied to the liquid crystal display 18 through the LCD control section 45, thereby displaying the moving video data contained in the moving video file linked to, e.g., the simple home page.

At this event, the audio codec 49 converts the audio data into the corresponding analog voice signal to be supplied to the speaker 17, thereby reproducing the audio data contained in the moving video file linked to, e.g., the simple home page.

Similar to the case of the electronic mail, the cellular phone 10 is capable of recording the data linked to the received simple home page in the memory stick 30 through the recording/reproducing section 52 in accordance with the user's operation.

In this sense, the cellular phone 10 has not only the function as a telephone but also the function of transmitting/receiving electronic mails and reading home pages. It is possible to select any one of such various functions. In case of searching home pages, it is essential for the cellular phone 10 having a small display area to provide easy-to-use graphic user interface.

Now, description will be made on the programs for the graphic user interface of the cellular phone 10. FIG. 5 is a diagram for describing the operation of the program to be used in the graphic user interface for controlling the menu displayed on the liquid crystal display 18. The program of the graphic user interface is stored in a ROM (not shown) in the main control section 40 for performing the processing to be described hereinafter by reading out the programs stored in such ROM.

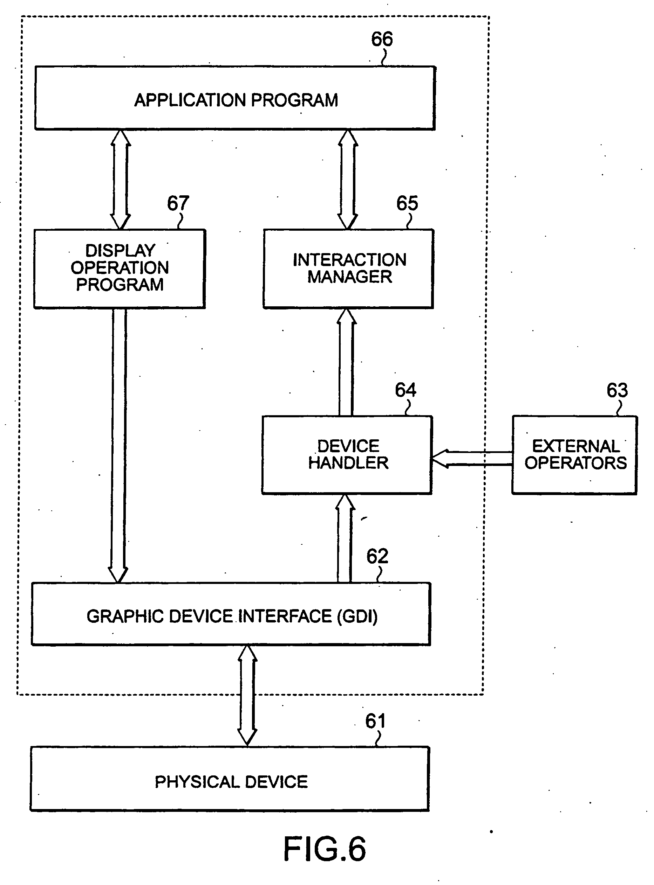

A physical device 61 in FIG.6 is, e.g., a memory area necessary for generating the video image on the liquid crystal display 18 in accordance with the application. A graphic device interface (GDI) 62 is a video component necessary to generate the above application video image. It is used to correlate the program necessary to generate on the liquid crystal display 18 images such as, e.g., cursor image, a scroll bar, a window frame and images supplied from the CCD camera 16 or logic devices and the memory areas storing such logic devices.

The logic devices are stored in a ROM (not shown), e.g., in the main control section 40 as a menu selection object data. The application images are formed as bit map data on the memory (the physical device 61) through the graphic interface 62 by specifying the relationship between the logic devices and their locations by the GUI and such bit map data is repeatedly read out to be displayed on the liquid crystal display 18, thereby producing the application images on the liquid crystal display 18.

External operators 63 are the operation keys 19 and the jog dial 22. In case of occurring any event such as turning the jog dial 22 for moving the image of the logical devices (e.g., cursor) displayed on the liquid crystal display 18 or continuously depressing the jog dial 22, since the addresses of the above mentioned memory area and pixels on the screen of the liquid crystal display 18 are correlated, a device handler (device driver) 64 detects the direction and amount of turning of the jog dial 22; the device handler 64 starts communicating with an interaction manager 65.

The interaction manager 65 interacts with an application program 66 based on the detected information. The application program 66 is developed in accordance with the intended use of the graphic user interface and is a program for defining the application images to be displayed on the liquid crystal display 18 and the detailed procedures to the input events from the external operators 63. Once the application 66 and the interaction manager 65 determine the response application image to the input event, the application 66 notifies the result to a display operation program 67.

The display operation program 67 operates to determine the way of displaying the response application images and, for example, the image that has been displayed before inputting any event is displayed as is and image elements of changed in location are distinguished by the operation. If new logic devices are required, such devices are read out of the memory locations and the GDI 62 is instructed to generate the response application image on the above mentioned memory.

According to the above construction, it is possible to implement the graphic interface with the operator on the liquid crystal display 18 in case of inputting the telephone number in response to the turning of the jog dial 22 as described hereinafter.

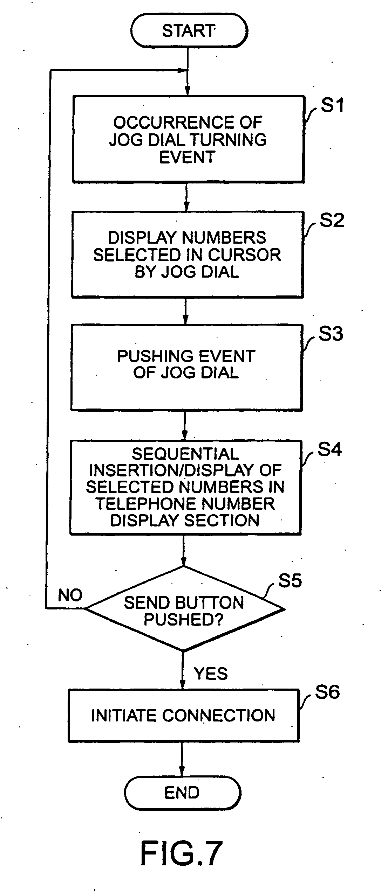

Next, the operation of inputting telephone digits provided by the graphic interface, as described hereinabove will be made by reference to the flowchart in FIG.7. In step S1, there occurs an event of turning the jog dial 22. As a premise, a telephone number input controlling program must be started prior to inputting such telephone number. It is to be noted that such program at the time of inputting telephone number may be started upon predetermined operations, e.g., turning of the jog dial 22, selection of icon menu, etc.

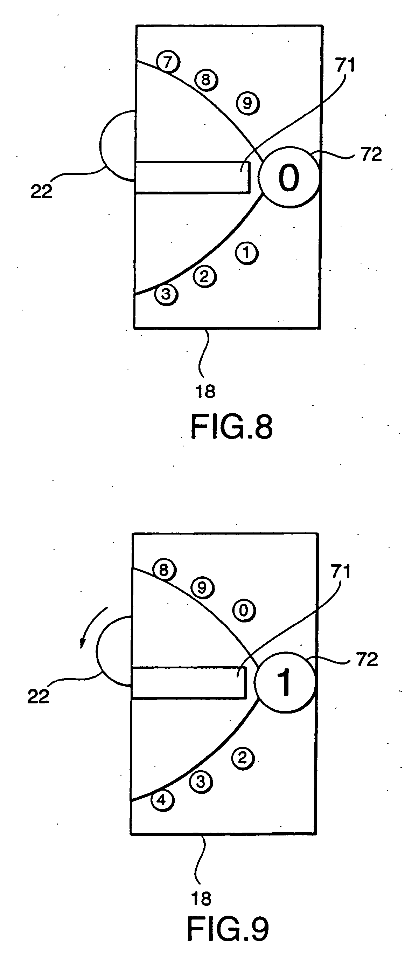

FIG.8 illustrates one example of images on the LCD display 18 to be displayed upon starting the predetermined program when inputting telephone number. Displayed on the LCD display 18 is an arc (semi-ellipse) having a telephone number display section in the arc for displaying the inputted telephone number. The jog dial 22 is typically circular and one half of which is accommodated in the display section 12 of the cellular phone 10 (see FIG.3) while the remaining half is extending outwardly to be visible to the user.

By taking advantage of such particular shape, it is preferable to provide a display on the LCD display so that the half of the jog dial 22 visible to the user and the arc displayed on the LCD display 18 form an image of a complete circle (of different magnification factor).

Displayed along the circumference of the arc on the LCD display 18 are digits 0 to 9. It is unnecessary to display all digits 0 to 9 at one time but as many digits as possible may be displayed. In the particular example in FIG.8, digits 0 to 3 and 7 to 9, 7 digits in total are displayed. For example, in the display condition in FIG.8, downward turning of the jog dial will result in the display screen as shown in FIG.9.

In other words, the downwards turning of the jog dial 22 will give an impression to drag the dial, thereby causing the digit "7" to disappear from the LCD display 18 and replaced by the digit "8" and shifting the display locations such as displaying the digit "9" at the location of "8", etc. As a result, 7 digits in total including digits 0 to 4 and 8-9 are displayed on the LCD display 18.

On the other hand, if the jog dial 22 is turned upwardly from the display condition in FIG.8, the display will be shifted to give an impression of dragging the dial to cause the digit "3" to disappear from the LCD display 18 and shifting the display locations of the remaining digits by 1 in such a manner to display "6" at the location of "7".

As described hereinabove, the display locations of the digits on the LCD display 18 advance in ganged with the turning of the jog dial 22 so as to display a new digit not displayed previously.

Displayed on the LCD display 18 is a fixed cursor 72 in which a digit is displayed in magnified than other digits. The cursor 72 may be at any location but it is preferable to choose the most visible location. The user operates the jog dial 22 so that the intended digit including the telephone number will be displayed in the cursor 72.

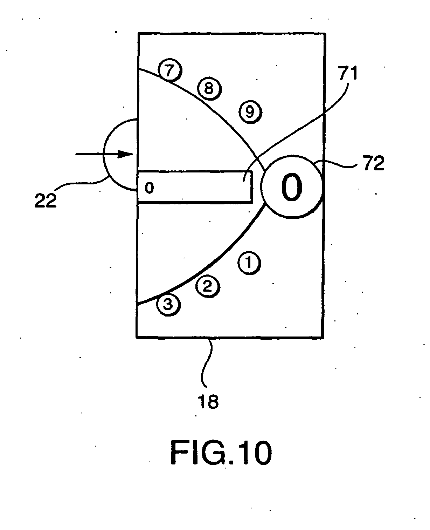

In addition, upon depressing the jog dial 22 when, e.g., "0" is displayed in the cursor 72 (as shown in the example in FIG.8), such digit "0" is displayed in the telephone number display section 71 as shown in FIG.10. The user repeats the above operations for sequentially inputting digits including the intended telephone number.

Returning to the flowchart in FIG.7, after occurrence of the jog dial turning event in step S1 the procedures advance to step S2 in which a selected digit corresponding to the turning event is displayed in the cursor 72. In step S3, upon occurrence of depressing event of the jog dial 22, the procedures advance to step S4 in which selected digits are sequentially inserted and displayed in the telephone number display section 71.

In step S5, a judgment is made whether or not any send button (one of the operation keys 19 in FIG.3) has been depressed. In other words, if inputting of the telephone number is not finished, the procedures return to step S1 and similar procedures as mentioned above are repeated. On the other hand, if it is determined in step S5 that the complete telephone number has been inputted, the procedure advances to step S6 in which connection is initiated to the telephone number as specified in the telephone number display section 71.

In this sense, by making the direction of manipulation of the jog dial 22 match the direction of movement of the digits displayed on the LCD display 18, it is possible for the user to intuitively recognize the number to be selected, thereby avoiding any error in selecting the digits. Also, moving the digits with respect to the fixed cursor makes the image dynamic and the digits easy to select.

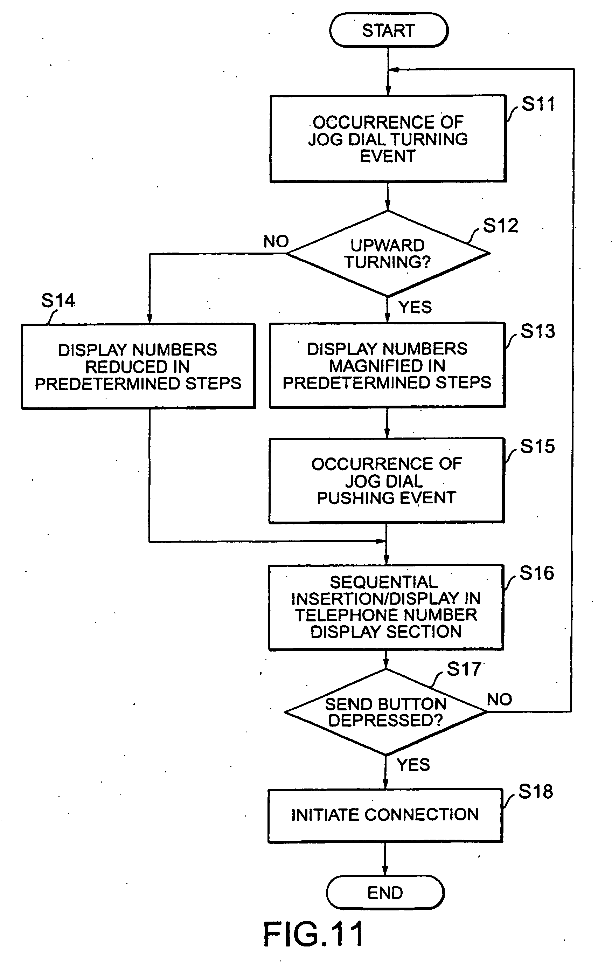

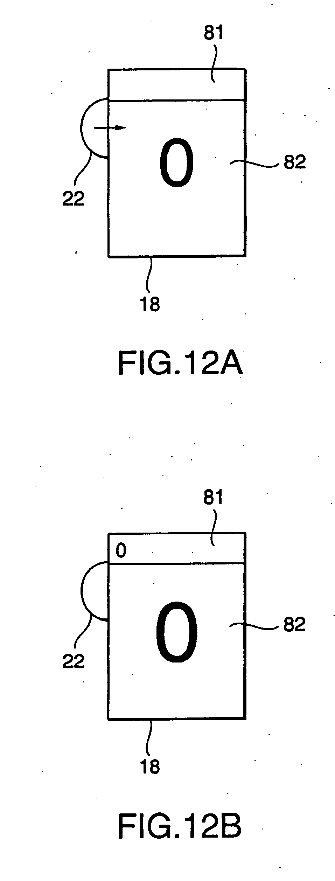

Next, before describing another embodiment of inputting a telephone number by reference to the flowchart in FIG. 11, a reference will be made to FIG.12 for describing images on the LCD display 18. As shown in FIG.12A, a telephone number display section 81 for displaying the telephone number including the inputted digits is located at the upper side of the LCD display 18. There is provided a number display section 82 for displaying a single digit below the telephone number display section 81.

When the jog dial 22 is depressed in the display condition as shown in FIG. 12A, a digit, i.e., "0" is additionally displayed on the telephone number display section 81. As a basic operation, the user manipulates the jog dial 22 so that the desired number including the telephone number is displayed in the number display section 82 and then, by depressing the jog dial 22, the above operations are sequentially repeated for storing the number including the telephone number.

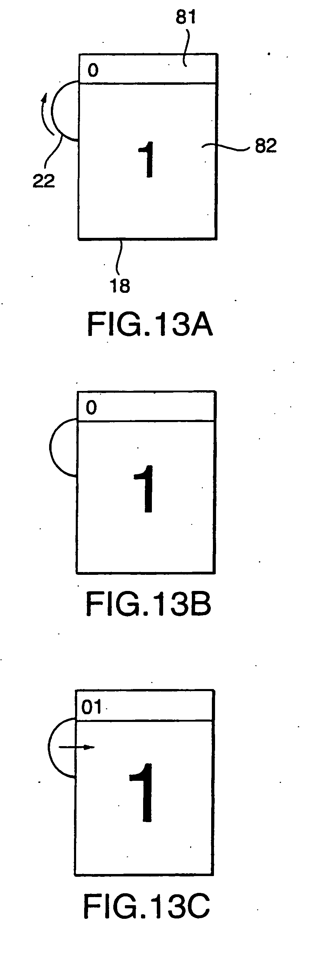

Describing the flowchart in FIG. 11, upon occurrence of the turning event of the jog dial 22 in step S11, it is checked if the turning direction is upwards, in step S12. If it is determined that the turning direction is upwards, the procedures advance to step S13 in which the displayed digit is magnified in a predetermined step. Such magnified display will be described herein after by reference to FIG.13.

When the jog dial 22 is turned upwardly while, e.g., "0" is displayed in the number display section 82 (as shown, e.g., in FIG.12B), the magnified display is the digit "1" which is the larger digit next to "0". In other words, the digit "1" is first displayed relatively small in the number display section 82 as shown in FIG.13A. Then, it is displayed as shown in FIG. 13B in a larger size than in FIG.13A. Subsequently, it is displayed as shown in FIG.13C in larger size than in FIG.13B. In this manner, the displayed number will be magnified in steps.

It is to be noted that the timing to change the display conditions from FIG.13A to FIG.13B and FIG.13C is arbitrary. In addition, it is possible to magnify the size in a continuous manner rather than in step manner.

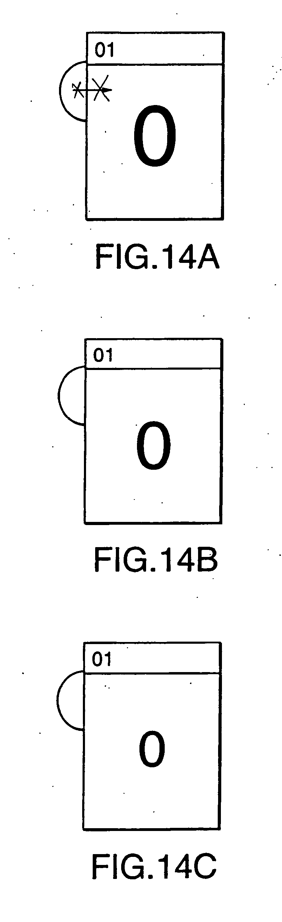

While such magnified display is being performed in step S13, in a case when the direction of turning of the jog dial 22 is determined to be downwards rather than upwards in step S12, the procedures advance to step S14 for performing a reduced number display. The reduced display is opposite to the magnified display. In other words, in the display condition of, e.g., FIG. 13C, if the jog dial 22 is turned downwards, "0" which is smaller digit next to "1" is displayed in reduced size as shown in FIG. 14.

First, a large "0" is displayed in the number display section 82 as shown in FIG.14A. It is, then, displayed as shown in FIG.14B in a smaller size than in FIG.14A and, as shown in FIG.14C, it is displayed in even smaller size than in FIG.14B.

The number is displayed on the LCD display 18 while performing the magnified display in step S13 or the reduced display in step S14. If the displayed number is one of the digits including the telephone number that the user is going to call, the jog dial 22 is depressed. Upon occurrence of the depression event of the jog dial 22 in step S15, the procedures advance to step S16 in which the sequential number is additionally displayed in the telephone number display section 81. In step S17, judgment is made whether the send button (not shown) is operated and, if it is determined that it has been operated, the procedures advance to step S18 in which connection is initiated; on the other hand, if it is determined that the send button has not been operated, the procedures return to step S11 to repeat the subsequent procedures.

As described hereinabove, only the number is displayed without displaying the cursor or the like, thereby enabling a weak-sighted user to easily recognize the number and avoiding possibility of selecting a wrong number. If the number displayed in magnified or reduced size is selected and In addition registered in the telephone number display section 81, it is also possible to have a condition of erasing the number and displaying nothing in the number display section 82 until subsequent manipulation of the jog dial 22.

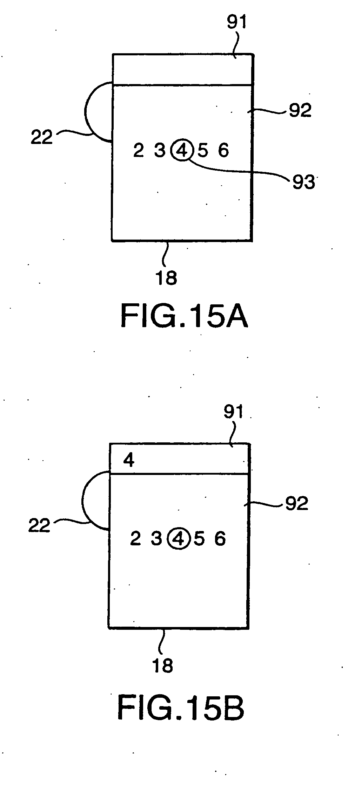

Next, still another way of inputting a telephone number will be described. Shown in FIG.15 are examples of images on the LCD display 18 in another embodiment. The example in FIG. 15A has basically the same screen configuration as in FIG. 12 including a telephone number display section 91 and a number display section 92. However, in the embodiment as shown in FIG. 15A, a plurality of digits (5 digits from 2 to 6 in FIG. 15A) are displayed in the number display section 92. Also displayed is a fixed cursor 93 for displaying the central number therein.

The number to be displayed in the cursor 93 is larger in size than the other digits and, in a model in which color display is available, it is preferable to display the central number in a color different from the other digits.

In a case in which a desired number including the telephone number is displayed in the cursor 93, the user depresses the jog dial 22. Upon depressing the jog dial 22, the number displayed in the cursor 93 is displayed in the telephone number display section 91 as shown in FIG.15B. Such procedures of selecting digits by turning the jog dial 22 and deciding digits by depressing the jog dial 22 are repeated for inputting any desired telephone number.

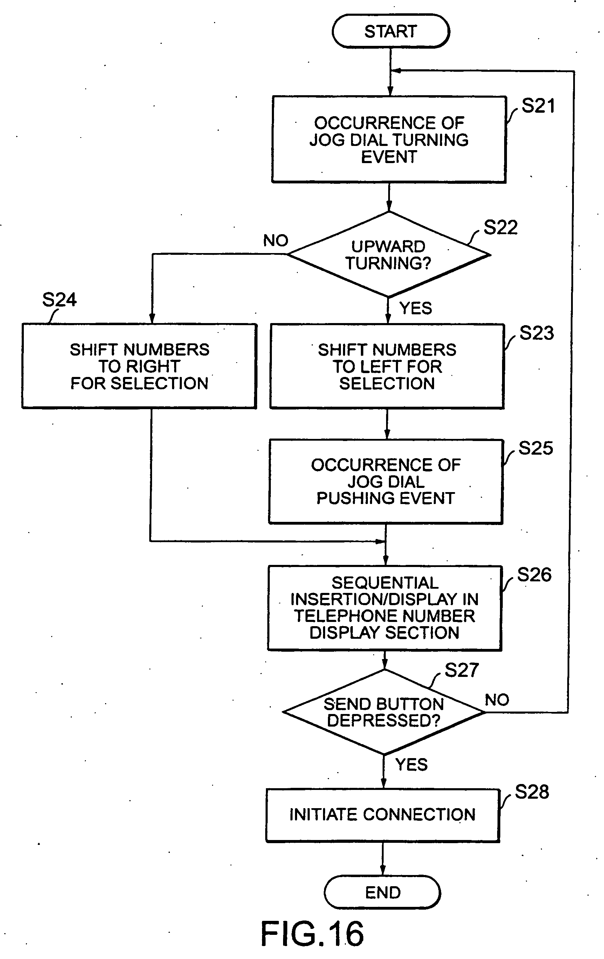

Inputting a desired telephone number in such display screen will be described hereunder by reference to the flowchart in FIG.16. Each processing step in the flowchart in FIG.16 is basically the same as that in the flowchart in FIG.11, so that detailed descriptions are omitted and only different processing steps will be described hereunder.

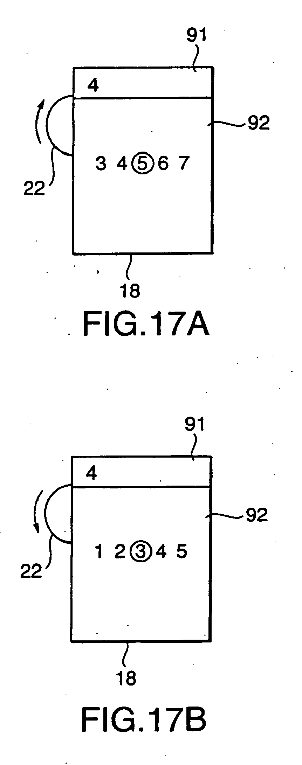

If the direction of turning of the jog dial 22 is determined upwards in step S22, the procedures advance to step S23 in which digits displayed in the number display section 92 are shifted to the left. If the jog dial 22 is turned upwards in the display condition, e.g., as shown in FIG.13, the numbers displayed in the number display section 92 are sequentially shifted to the left as shown in FIG.17.

In other words, the number "2" displayed in the number display section 92 is pulled out as a result of the upwards turning of the jog dial 22. In other words, it gives an image that "2" is dragged out and the other numbers are shifted to the left in accordance with the dragging. As a result, also displayed in the number display section 92 is the number "7" which has not been previously displayed.

On the other hand, if the direction of turning the jog dial 22 is determined to be downwards rather than upwards in step S22, the procedures advance to step S24 in which the numbers displayed in the number display section 92 are shifted to the right. In other words, as shown in FIG.17B, the number "7" displayed at the right end is pushed out by the downwards turning of the jog dial 22. As a result, other displayed numbers are sequentially shifted to the right and newly displaying the number "1" at the left end.

As described hereinabove, the user turns the jog dial 22 so that the desired number is displayed in the cursor 93. The procedures in step S25 and the subsequent steps are the similar to the step S15 and the subsequent steps in FIG.11 and thus description will be omitted herein.

It is to be noted that although the numbers displayed in the number display section 92 are shifted to the left when the direction of turning of the jog dial 22 is upwards in the above description, they may be shifted to the right and, similarly, shifting the numbers displayed in the number display section 92 to the right by the downwards turning of the jog dial 22 in the above description may be modified to shift to the left.

In other words, in the configuration as shown in FIG. 15, since the visible bottom end of the jog dial 22 corresponds to the line of arranged numbers in the number display section 92, upwards turning of the jog dial 22 gives an impression to the user that the numbers displayed in the number display section 92 are pulled out, it is preferable to shift them to the left. However, if the upper end of the visible jog dial 22 is made to correspond to the line of arranged numbers in the number display section 92, it is preferable to shift the numbers to the right, thereby giving an impression to push them out when the jog dial 22 is turned upwardly

As described hereinabove, it is preferable to set the direction of shifting the numbers displayed in the number display section 92 either to the right or the left depending on the direction of turning of the jog dial 22 as well as the location of the jog dial 22 installed in the cellular phone 10.

Such arrangement to give an impression to the user that the direction of turning of the jog dial 22 coincides with the direction of shifting the numbers displayed in the number display section 92 enables the users to easily and instinctively manipulate to display the desired number in the cursor 93. In addition, moving the numbers with respect to the fixed cursor 93 is effective to actively moving the images in the number display section 93, thereby enabling weak-sighted users to easily recognize the changes in the display.

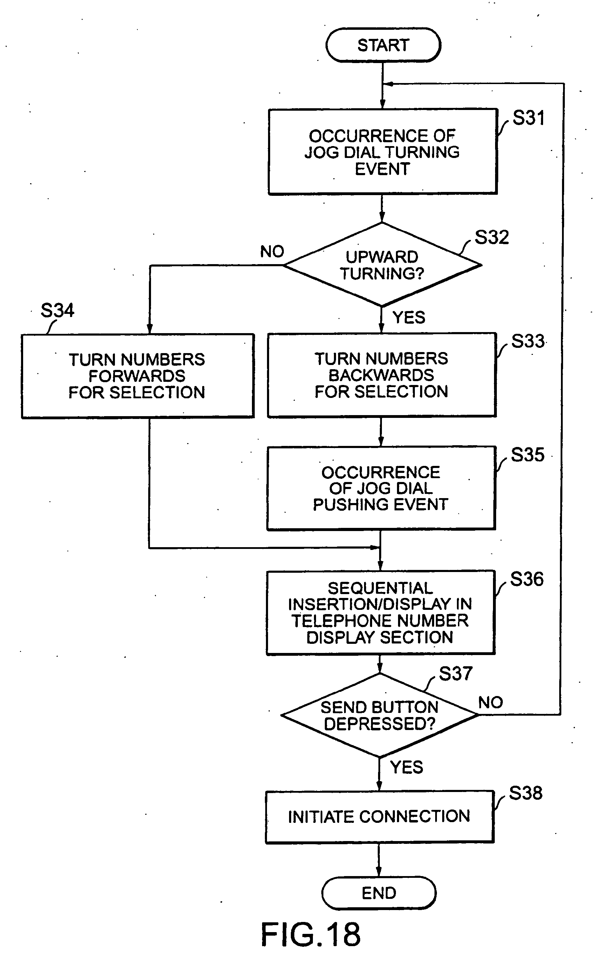

Yet another embodiment of inputting a telephone number will be described by reference to the flowchart in FIG. 18. Since the processing steps in the flowchart in FIG.18 are basically the same as those in FIG. 11, no detailed descriptions will be given but only differences will be described hereinafter. If it is determined that the direction of turning of the jog dial 22 is upwards in step S32, the procedures advance to step S33.

In step S33, a display will be performed to give an impression to the user that the number to be displayed on the LCD display 18 is turning backwardly. On the other hand, if the direction of turning of the jog dial 22 is determined to be downwards rather than upwards in step S32, the procedures advance to step S34. In step S33, performed is a display to give an impression that the number displayed on the LCD display 18 turns forwardly.

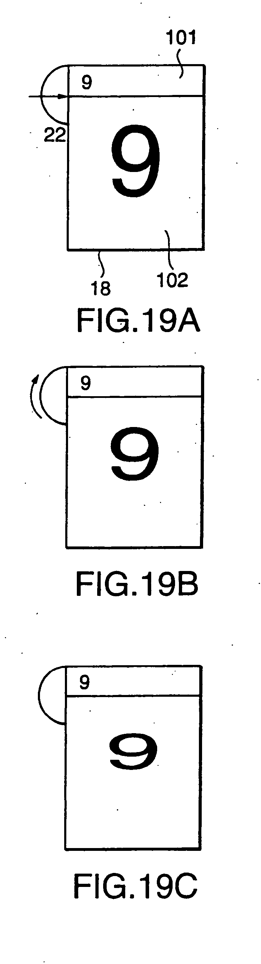

Displays in either step S33 or step S34 will be described by reference to FIG.19A. As shown in FIG.19A, displayed on the LCD display 18 is an image including a telephone number display section 101 and a number display section 102. If the jog dial 22 is depressed while the number "9" is being displayed in the number display section 102 as shown in FIG.19A, "9" is In addition displayed in the telephone number display section 101.

The above procedures of displaying a desired number in the number display section 102 are repeated by manipulating the jog dial 22 and depressing it for inputting the telephone number. In the event of displaying the number that the user intends to input in the number display section 102, such display will be changed depending on the direction of turning of the jog dial 22; for example, if the jog dial 22 is turned upwardly in a condition, e.g., as shown in FIG.19A, the number displayed in the number display section 102 moves to the display condition as shown in FIG.19C by way of the display condition as shown in FIG.19B, thereby giving an impression that the displayed number is dragged upwardly.

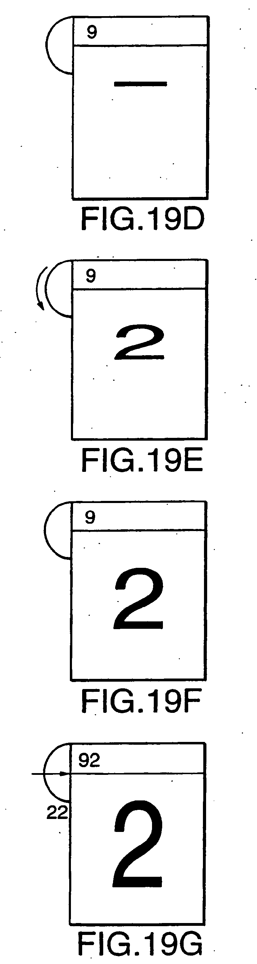

As for the change in the displayed condition, the number will ultimately lose its shape and is displayed as a horizontal line as shown in FIG.19D. If the jog dial 22 is turned downwards in the display condition, e.g., as shown in FIG. 19D, the display will change to the display condition as shown in FIG.19G by way of the display conditions as shown in FIGs.19E and 19F in a manner to drag the number downwards. It is to be noted that the number increments when the jog dial 22 is turned upwardly but decrements when the jog dial 22 is turned downwardly.

Such coincidence in the direction of turning of the jog dial 22 and the direction of movement of the number enables the user to easily recognize the number and avoiding any error in selecting numbers.

Although the series of procedures described above may be performed by means of hardware, they can be performed by means of software. In case of performing such series of procedures by means of software, various programs constituting such software are installed in hardware of a computer or installed from a storage medium into, e.g., a general purpose personal computer capable of performing various functions by installing various programs.

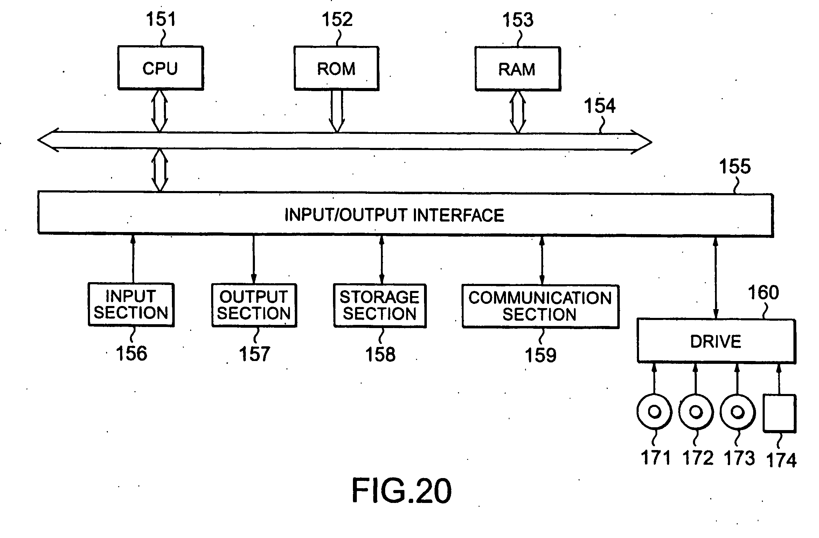

FIG. 20 shows an internal construction of a general purpose personal computer. A CPU (Central Processing Unit) 151 of the personal computer performs various processing in accordance with programs stored in a ROM (Read Only Memory) 152. Stored in a RAM (Random Access Memory) 153 are data and programs necessary for the CPU 151 to perform various processes. An input output interface 155 to which an input section 116 including keyboards and a mouse is connected receives signals from the input section 156 to be supplied to the CPU 151. Also connected to the input output interface 155 is an output section 117 which comprises a display, a speaker, etc.

Furthermore, connected to the input output interface 155 are a storage section 158 including a hard disk, etc. and a communication section 159 which communicates with other devices through a network for sending and receiving data. A drive 160 is provided to read data from a storage medium such as a magnetic disk 171, an optical disk 172, a magneto optical disk173, a semiconductor memory 174 or the like and to write data.

As shown in FIG.20, the recording medium is distributed to the user separately from the personal computer not only in a package medium including the magnetic disk (including a floppy disk) 171, the optical disk (including a CD-ROM (Compact Disk-Read Only Memory, a DVD (Digital Versatile Disk) 172, the magneto optical disk (including MD (Mini-Disk) )173 or the semiconductor memory 174 for storing programs but also provided to the user by pre-installing in hard disk including the ROM 152 and the storage section 158 of the computer for storing programs.

It is to be noted in this specification that the steps describing the programs to be provided in a medium can be executed in the time sequence as described but not necessarily be processed in a time sequence as described, i.e., may be processed in parallel or separately.

Also, it is to be noted that the term "system" in this specification may indicate an entire apparatus including a plurality of apparatuses.

### Industrial Applicability

According to a first information processing apparatus, method and a recording medium of the present invention, display location of currently displayed numbers is changed depending on the manipulation of the operation section in a first direction to display on one of the displayed numbers a cursor that is displayed at a fixed location independent of the manipulation of the operation section. On the other hand, if the operation section is manipulated in a second direction, the number in the cursor is displayed at a different location. Such arrangement enables one to easily select and input a desired number.

According to a second information processing apparatus, method and recording medium of the present invention, displayed is a number in a larger or smaller size than the one that has been displayed depending on the manipulation of the operation section in a first direction and, on the contrary, if the operation section is manipulated in a second direction, the numbers that have been displayed are made to be displayed in different display locations; such arrangement makes the displayed numbers easily visible and thus enables one to easily select and input a desired number.

## Claims

1. An information processing apparatus having an operation section (22) operable in a rotational direction and a pressing direction orthogonal to the rotation axis of the rotational direction, the operation section (22) being a circular shape, half of which extends outwardly of the information processing apparatus to be visible to a user, **characterized in that** the apparatus comprises:
first display means (18) for displaying a predetermined number of digits and changing a position of displayed digits in response to operation of the operation section (22) in the rotational direction;
second display means for displaying on one of the digits displayed by the first display means a cursor (72) at a position independent of the operation of the operation section and for magnifying the digit on which the cursor (72) is displayed; and
third display means for displaying the digit that is displayed at the location of the cursor (72) by the first display means (18) at a different display area (71) from the display area of the first display means (18) if the operation section is operated in the pressing direction; wherein
the first display means (18) is arranged to display the predetermined number of digits in a substantially arc-shaped array and to change the position of the displayed digits by rotating the arc-shaped array in a direction corresponding to the rotational direction of the operation section; and
the substantially arc-shaped array displayed on the first display means (18) is aligned with the operation section (22) such that the half of the operation section (22) visible to a user and the arc-shaped array displayed on the first display means (18) form an image of a complete circle of different magnification factors.

2. An information processing method for an information processing apparatus having an operation section (22) operable in a rotational direction and a pressing direction orthogonal to the rotation axis of the rotational direction, the operation section (22) being a circular shape, half of which extends outwardly of the information processing apparatus to be visible to a user, **characterized in that** the method comprises:
a first display controlling step for controlling display of a predetermined number of digits and changing display position of the displayed digits in response to operation of the operation section in the rotational direction;
a second display controlling step for controlling display of a cursor (72) on one of the digits displayed in the processing of the first display controlling step the cursor (72) having a fixed location independent of the operation of the operation section and for causing the magnification of the digit on which the cursor (72) is displayed; and
a third display controlling step for controlling display of the digit at the location of the cursor (72) displayed by the processing of the second display controlling step in a display area (71) different from the display area defined in the first display controlling step if the operation section is manipulated in the pressing direction;
displaying the predetermined number of digits in a substantially arc shaped array; and
changing the position of the displayed digits by rotating the arc shaped array in a direction corresponding to the rotational direction of the operation section, wherein
the substantially arc-shaped array is aligned with the operation section (22) such that the half of the operation section (22) visible to an user and the arc-craped array displayed on the first display means (18) form an image of a complete circle of different magnification factor.

3. A program recorded in computer readable form which, when run on an information processing apparatus having an operation section operable in a rotational direction and a pressing direction orthogonal to the rotation axis of the rotational direction, performs all the steps of claim 2.

## Patentansprüche

1. Informationsverarbeitungsvorrichtung, welche einen Betätigungsabschnitt (22) hat, der in einer Drehrichtung und in einer Druckrichtung orthogonal zur Drehachse der Drehrichtung betätigbar ist, wobei der Betätigungsabschnitt (22) eine kreisförmige Form aufweist, wobei eine Hälfte davon sich nach außen von der Informationsverarbeitungsvorrichtung erstreckt, um für einen Benutzer sichtbar zu sein, **dadurch gekennzeichnet, dass** die Vorrichtung aufweist:
eine erste Anzeigeeinrichtung (18), um eine vorgegebene Anzahl von Ziffern anzuzeigen und um eine Position der angezeigten Ziffern als Antwort auf die Betätigung des Betätigungsabschnitts (22) in der Drehrichtung zu ändern;
eine zweite Anzeigeeinrichtung, um auf einer von den Ziffern, welche durch die erste Anzeigeeinrichtung angezeigt wird, einen Cursor (72) bei einer Position unabhängig von der Betätigung des Betätigungsabschnitts anzuzeigen und um die Ziffer, auf welcher der Cursor (72) angezeigt wird, zu vergrößern; und
eine dritte Anzeigeeinrichtung, um die Ziffer, welche an der Stelle des Cursors (72) durch die erste Anzeigeeinrichtung (18) angezeigt wird, an einem unterschiedlichen Anzeigebereich (71) von dem Anzeigebereich der ersten Anzeigeeinrichtung (18) anzuzeigen, wenn der Betätigungsabschnitt in der Druckrichtung betätigt wird; wobei
die erste Anzeigeeinrichtung (18) eingerichtet ist, die vorgegebene Anzahl an Ziffern in einer im Wesentlichen bogenförmigen Matrix anzuzeigen und um die Position der angezeigten Ziffern zu ändern, indem die bogenförmige Matrix in einer Richtung gedreht wird, welche der Drehrichtung des Betätigungsabschnitts entspricht; und
die im Wesentlichen bogenförmige Matrix, welche auf der ersten Anzeigeeinrichtung (18) angezeigt wird, mit dem Betätigungsabschnitt (22) ausgerichtet ist, so dass die Hälfte des Betätigungsabschnitts (22), der für einen Benutzer sichtbar ist, und die bogenförmige Matrix, welche auf der erste Anzeigeeinrichtung (18) angezeigt wird, ein Bild eines vollständigen Kreises unterschiedlicher Verstärkungsfaktoren bilden.

2. Informationsverarbeitungsverfahren für eine Informationsverarbeitungsvorrichtung, welche einen Betätigungsabschnitt (22) hat, der in einer Drehrichtung und in einer Druckrichtung orthogonal zur Drehachse der Drehrichtung betätigbar ist, wobei der Betätigungsabschnitt (22) eine kreisförmige Form hat, bei der eine Hälfte davon sich nach außen von der Informationsverarbeitungsvorrichtung erstreckt, um für einen Benutzer sichtbar zu sein, **dadurch gekennzeichnet, dass** das Verfahren umfasst:
einen ersten Anzeigesteuerschritt, um die Anzeige einer vorgegebenen Anzahl an Ziffern zu steuern und um die Anzeigeposition der angezeigten Ziffern als Antwort auf die Betätigung des Betätigungsabschnitts in der Drehrichtung zu ändern;
einen zweiten Anzeigesteuerschritt, um die Anzeige eines Cursors (72) auf einer der Ziffern zu steuern, welche bei der Verarbeitung des ersten Anzeigesteuerschritts angezeigt werden, wobei der Cursor (72) eine feste Lage unabhängig von der Betätigung des Betätigungsabschnitts hat, auf dem der Cursor (72) angezeigt wird, und um die Verstärkung der Ziffern zu veranlassen; und
einen dritten Anzeigesteuerschritt, um die Anzeige der Ziffern an der Stelle des Cursors (72) zu steuern, der durch die Verarbeitung des zweiten Anzeigesteuerschritts angezeigt wird, in einem Anzeigebereich (71) unterschiedlich von dem Anzeigebereich, der im ersten Anzeigesteuerschritt definiert ist, wenn der Betätigungsabschnitt in der Druckrichtung gehandhabt wird;
Anzeigen der vorgegebenen Anzahl von Ziffern in einer im Wesentlichen bogenförmigen Matrix; und
Ändern der Position der angezeigten Ziffern durch Drehung der bogenförmigen Matrix in einer Richtung entsprechend der Drehrichtung des Betätigungsabschnitts, wobei
die im Wesentlichen bogenförmige Matrix mit dem Betätigungsabschnitt (22) so ausgerichtet ist, dass die Hälfte des Betätigungsabschnitts (22), die für einen Benutzer sichtbar ist, und die bogenförmige Matrix, welche auf der ersten Anzeigeeinrichtung (18) angezeigt wird, ein Bild eines vollständigen Kreises unterschiedlicher Verstärkungsfaktoren bilden.

3. Programm, welches in einer computer-lesbaren Form aufgezeichnet ist, welches, wenn dies auf einer Informationsverarbeitungsvorrichtung abläuft, welche einen Betätigungsabschnitt hat, der in einer Drehrichtung und in einer Druckrichtung orthogonal zur Drehachse der Drehrichtung betätigbar ist, alle Schritte nach Anspruch 2 durchführt.

## Revendications

1. Appareil de traitement d'information comportant une section d'opération (22) pouvant être actionnée dans une direction de rotation et dans une direction de pression qui est orthogonale à l'axe de rotation de la direction de rotation, la section d'opération (22) étant une forme circulaire dont la moitié s'étend à l'extérieur de l'appareil de traitement d'information de manière à être visible pour un utilisateur, **caractérisé en ce que** l'appareil comprend :
un premier moyen d'affichage (18) pour afficher un nombre prédéterminé de chiffres et pour modifier une position de chiffres affichés en réponse à une opération de la section d'opération (22) dans la direction de rotation ;
un second moyen d'affichage (18) pour afficher, sur l'un des chiffres affichés par le premier moyen d'affichage, un curseur (72) en une position indépendante de l'opération de la section d'opération et pour agrandir le chiffre sur lequel le curseur (72) est affiché ; et
un troisième moyen d'affichage pour afficher le chiffre qui est affiché à la localisation du curseur (72) par le premier moyen d'affichage (18) au niveau d'une zone d'affichage différente (71) de la zone d'affichage du premier moyen d'affichage (18) si la section d'opération est actionnée dans la direction de pression ; dans lequel
le premier moyen d'affichage (18) est agencé pour afficher le nombre prédéterminé de chiffres selon un réseau sensiblement en forme d'arc et pour modifier la position des chiffes affichés en faisant tourner le réseau en forme d'arc dans une direction qui correspond à la direction de rotation de la section d'opération ; et
le réseau sensiblement en forme d'arc qui est affiché sur le premier moyen d'affichage (18) est aligné avec la section d'opération (22) de telle sorte que la moitié de la section d'opération (22) qui est lisible pour un utilisateur et le réseau en forme d'arc qui est affiché sur le premier moyen d'affichage (18) forment une image d'un cercle complet de facteurs d'agrandissement différents.

2. Procédé de traitement d'information pour un appareil de traitement d'information comportant une section d'opération (22) pouvant être actionnée dans une direction de rotation et une direction de pression orthogonale à l'axe de rotation de la direction de rotation, la section d'opération (22) étant une forme circulaire dont la moitié s'étend à l'extérieur de l'appareil de traitement d'information de manière à être visible pour un utilisateur, **caractérisé en ce que** le procédé comprend :
une première étape de commande d'affichage pour commander l'affichage d'un nombre prédéterminé de chiffres et pour modifier une position d'affichage des chiffres affichés en réponse à l'actionnement de la section d'opération dans la direction de rotation ;
une seconde étape de commande d'affichage pour commander l'affichage d'un curseur (72) sur l'un des chiffres affichés lors du traitement de la première étape de commande d'affichage, le curseur (72) présentant une localisation fixe qui est indépendante de l'actionnement de la section d'opération, et pour provoquer l'agrandissement du chiffre sur lequel le curseur (72) est affiché ; et
une troisième étape de commande d'affichage pour commander l'affichage du chiffre à la localisation du curseur (72) qui est affiché au moyen du traitement de la seconde étape de commande d'affichage dans une zone d'affichage (71) qui est différente de la zone d'affichage qui est définie au niveau de la première étape de commande d'affichage si la section d'opération est manipulée dans la direction de pression ;
l'affichage du nombre prédéterminé de chiffres selon un réseau sensiblement en forme d'arc ; et
la modification de la position des chiffes affichés en faisant tourner le réseau en forme d'arc dans une direction qui correspond à la direction de rotation de la section d'opération, dans lequel :
le réseau sensiblement en forme d'arc est aligné avec la section d'opération (22) de telle sorte que la moitié de la section d'opération (22) qui est visible pour un utilisateur et le réseau en forme d'arc qui est affiché sur la première zone d'affichage (18) forment une image de cercle complet de facteurs d'agrandissement différents.

3. Programme enregistré sous une forme lisible par ordinateur qui, lorsqu'il est déroulé sur un appareil de traitement d'information qui comporte une section d'opération pouvant être actionnée dans une direction de rotation et dans une direction de pression qui est orthogonale à l'axe de rotation de la direction de rotation, réalise toutes les étapes de la revendication 2.
